# FASCICULE DE BREVET EUROPEEN

(11) **EP 0 439 974 B1**
(45) Date de publication et mention de la délivrance du brevet: **21.07.1993**
(21) Numéro de dépôt: 90403580.5
(22) Date de dépôt: 13.12.1990
(51) Int. Cl.: B60T 13/52, B60T 13/565

(54) **Système de freinage assisté pour véhicule automobile**
Servobremsanlage für Kraftfahrzeug
Servo brake system for motor vehicle

(30) Priorité: 31.01.1990 FR 9001121
(43) Date de publication de la demande: 07.08.1991
(73) Titulaire: ALLIEDSIGNAL EUROPE SERVICES TECHNIQUES, 93700 Drancy (FR)
(72) Inventeur: Gautier, Jean-Pierre, Bendix Europe Techn., F-93700 Drancy (FR)
(74) Mandataire: Bentz, Jean-Paul

(56) Documents cités:
- GB-A- 2 193 545
- US-A- 3 008 771
- US-A- 4 071 283

## Description

La présente invention concerne les systèmes de freinage assisté pour véhicules automobiles et, plus particulièrement, des systèmes incluant plus d'un servomoteur à dépression.

Les éléments de ces systèmes sont bien connus de l'homme de l'art et l'on ne reviendra ici ni sur leur construction ni sur leur fonctionnement.

Le document US-A-3 201 177 décrit par exemple un système incluant un servomoteur à dépression commandé par une pédale, agissant sur un maître cylindre simple alimentant les moteurs de frein des roues avant d'un véhicule, et un second servomoteur à dépression, pneumatiquement relié au premier, et agissant sur un autre maître cylindre simple alimentant les moteurs de frein des roues arrière.

On connaît aussi du document US-A-4,071,283, un système voisin dans lequel le second servomoteur est alimenté à travers une électrovalve déterminant la mise à l'air libre de l'une de ses deux chambres, ce qui permet de réaliser des fonctions telles que celles d'un compensateur de pression ou d'antiblocage des roues arrière, par simple action sur cette électrovalve.

Le document US-A-4,708,401 décrit une variante d'un tel système dans lequel l'électrovalve est une électrovalve pneumatique multi-directionnelle.

Ces systèmes souffrent de plusieurs inconvénients. En effet, la fiabilité et la durée de vie d'une électrovalve ne sont pas identiques à celles d'un servomoteur à dépression, ce qui peut entraîner la mise hors service des freins des roues arrière du véhicule. Par ailleurs, les systèmes de freinage à trois circuits hydrauliques ou plus ne sont pas appréciés par les constructeurs d'automobiles du fait de l'augmentation correspondante du nombre de purges et de remplissages à effectuer en ligne.

La présente invention a pour but d'obvier à ces inconvénients. Par ailleurs, d'autres problèmes se posent avec les systèmes de freinage assisté à servomoteur à dépression unique. En effet, les véhicules équipés d'un dispositif d'antiblocage des roues réclament généralement plus de liquide de frein que les véhicules qui n'ent sont pas équipés, et il est alors nécessaire d'augmenter la taille du maître cylindre. Par suite, il est aussi nécessaire d'augmenter la taille du servomoteur à dépression pour assurer le même effort d'assistance. Comme l'espace disponible dans le compartiment moteur des véhicules est, par ailleurs, de plus en plus réduit, il se pose alors un problème.

L'invention a également pour objet une solution à ce problème.

La présente invention concerne donc un système de freinage assisté comprenant deux maîtres cylindres tandem commandés chacun par l'intermédiaire du piston d'un servomoteur à dépression comportant au moins deux chambres, l'un des servofreins étant commandé au moyen d'une pédale et comportant un moyen de valve permettant d'engendrer une différence entre les pressions régnant dans les deux chambres correspondantes, et un réservoir d'alimentation en fluide de freinage des circuits hydrauliques associés.

Selon l'invention, les deux chambres de l'un des servomoteurs communiquent respectivement avec les deux chambres correspondantes de l'autre servomoteur, et les deux circuits hydrauliques associés à l'un des maîtres cylindres communiquent respectivement avec les deux circuits hydrauliques de l'autre maître cylindre.

Il est alors possible d'utiliser des maîtres cylindres tandem conventionnels de volume réduit et des servofreins à dépression également de volume réduit. Par ailleurs, le deuxième servomoteur peut être disposé n'importe où, ce qui est favorable pour les constructeurs.

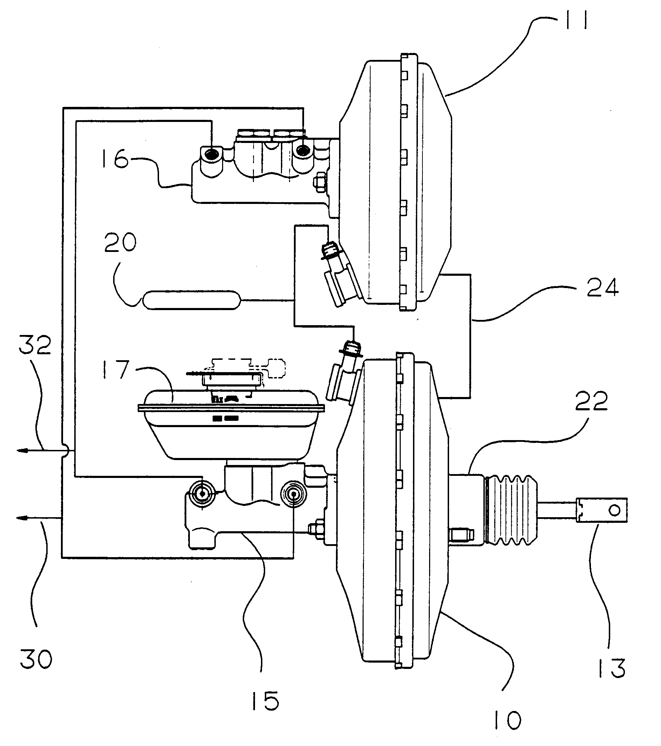

L'invention sera mieux comprise et d'autres buts, avantages et caractéristiques de celle-ci apparaîtront plus clairement à la lecture de la description qui suit d'un mode de réalisation donné à titre non limitatif et à laquelle une planche de dessin est annexée sur laquelle :
- la Figure unique représente schématiquement un système de freinage assisté conforme à la présente invention.

En référence maintenant à cette Figure unique, un premier servomoteur à dépression 10 est commandé classiquement par une pédale non représentée s'appuyant sur un poussoir 13. Comme tout servomoteur, il comprend au moins deux chambres séparées par une membrane fixée à un piston. L'une des chambres, dite chambre avant, est reliée à une source de vide 20 qui peut avantageusement être le conduit d'admission des gaz au moteur à combustion interne ou bien une simple pompe à vide. L'autre chambre, dite chambre arrière, est au repos reliée à la même source de vide 20, mais lorsque le conducteur enfonce la pédale, un moyen de valve, logé dans le col 22 par exemple, met cette chambre arrière en communication avec l'atmosphère.

La différence des pressions régnant dans les chambres avant et arrière ainsi engendrée provoque le déplacement du piston du servomoteur, lequel assure le déplacement des pistons du maître cylindre associé 15. Ce dernier est pourvu d'un réservoir 17 de liquide de frein permettant d'alimenter les circuits hydrauliques associés 30,32 partiellement représentés.

Conformément à l'invention, un deuxième servomoteur 11, similaire au premier mais ne comportant pas de moyen de valve pour la chambre arrière, est connecté en parallèle avec le premier servomoteur 10. Ainsi les chambres avant des deux servofreins communiquent entre elles et avec la source de vide 20, tandis que les deux chambres arrière communiquent entre elles par un conduit 24.

Le piston du deuxième servomoteur 11 assure le déplacement des pistons d'un second maître cylindre 16 dont les conduits de sortie sont reliés aux deux mêmes circuits hydrauliques 30,32.

Il résulte d'un tel système que la fiabilité n'est nullement affectée par l'adjonction de ce deuxième servomoteur 11, puisqu' il sera toujours possible de freiner le véhicule en cas de défaillance tant de la source de vide 20 que de l'un des circuits hydrauliques 30,32, aucun élément pouvant affecter cette fiabilité n'ayant été ajouté au système de freinage.

De ce fait, chacun des maîtres cylindres 15,16 est nettement plus petit que celui qui aurait été nécessaire avec un système classique, ce qui économise grandement l'espace, d'autant plus qu'il en est de même de chacun des servomoteurs à dépression 10,11.

En outre, le deuxième servomoteur 11 peut être placé n'importe où, ce qui permet d'utiliser des espaces disponibles non accessibles normalement.

L'homme du métier comprendra que des variantes peuvent être apportées au système, comme par exemple l'adjonction d'un troisième ensemble servofrein-maître cylindre en parallèle identique au deuxième. Les servofreins 10,11 peuvent être équipés de systèmes leur permettant d'assurer la fonction d'antipatinage des roues motrices, et les circuits hydrauliques de systèmes d'antiblocage des roues.

## Revendications

1. Système de freinage assisté comprenant deux maîtres cylindres tandem (15,16) commandés chacun par l'intermédiaire du piston d'un servomoteur à dépression (10,11) comportant au moins deux chambres, l'un (10) desdits servofreins étant commandé au moyen d'une pédale et comportant un moyen de valve permettant d'engendrer une différence entre les pressions régnant dans les deux chambres correspondantes, un réservoir d'alimentation (17) en fluide de freinage des circuits hydrauliques associés, caractérisé en ce que les deux chambres de l'un (10) desdits servomoteurs communiquent respectivement avec les deux chambres correspondantes de l'autre servomoteur (11), et que les deux circuits hydrauliques (30,32) associés à l'un (15) desdits maîtres cylindres communiquent respectivement avec les deux circuits hydrauliques (30,32) de l'autre maître cylindre (16).

## Patentansprüche

1. Servobremsanordnung mit zwei Tandem-Hauptzylindern (15, 16), die jeweils mittels des Kolbens eines wenigstens zwei Kammern aufweisenden, mit Unterdruck arbeitenden Servomotors (10, 11) gesteuert werden, wobei der eine (10) der Bremskraftverstärker mittels eines Pedals betätigt wird und ein Absperrorgan enthält, mit dessen Hilfe eine Differenz zwischen den in den zwei entsprechenden Kammern herrschenden Drücken erzeugt werden kann, mit einem Bremsflüssigkeits-Versorgungsreservoir (17) der zugehörigen Hydraulikkreise, dadurch gekennzeichnet, daß die zwei Kammern des einen (10) der Servomotore jeweils mit den zwei entsprechenden Kammern des anderen Servomotors (10) in Verbindung stehen und daß die zwei dem einen (15) der Hauptzylinder zugeordneten Hydraulikkreise (30, 32) jeweils mit den zwei Hydraulikkreisen (30, 32) des anderen Hauptzylinders (16) in Verbindung stehen.

## Claims

1. Boosted brake system comprising two tandem master cylinders (15, 16), each controlled by means of the piston of a vacuum booster (10, 11) comprising at least two chambers, one (10) of said brake boosters being controlled by means of a pedal and comprising a valve means making it possible to generate a difference between the pressures prevailing in the two corresponding chambers, and a reservoir (17) for feeding brake fluid to the associated hydraulic circuits, characterized in that the two chambers of one (10) of said boosters communicate respectively with the two corresponding chambers of the other booster (11), and in that the two hydraulic circuits (30,32) associated with one (15) of said master cylinders communicate respectively with the two hydraulic circuits (30, 32) of the other master cylinder (16).
